# EUROPÄISCHE PATENTSCHRIFT

(11) **EP 2 959 048 B1**
(45) Veröffentlichungstag und Bekanntmachung des Hinweises auf die Patenterteilung: **09.11.2016**
(21) Anmeldenummer: 14705310.2
(22) Anmeldetag: 06.02.2014
(51) Int. Cl.: D06F 37/30, D06F 33/02, H02P 6/20, H02P 6/24, H02P 27/06, D06F 58/28, D06F 58/08

(54) **HAUSHALTSGERÄT, INSBESONDERE WÄSCHETROCKNER, MIT EINEM BÜRSTENLOSEN GLEICHSTROMMOTOR UND VERFAHREN ZUM BETREIBEN EINES BÜRSTENLOSEN GLEICHSTROMMOTORS IN EINEM HAUSHALTSGERÄT**
DOMESTIC APPLIANCE, IN PARTICULAR CLOTHES DRYER, HAVING A BRUSHLESS DIRECT-CURRENT MOTOR AND METHOD FOR OPERATING A BRUSHLESS DIRECT-CURRENT MOTOR IN A DOMESTIC APPLIANCE
APPAREIL MÉNAGER, EN PARTICULIER SÈCHE-LINGE, DOTÉ D'UN MOTEUR À COURANT CONTINU SANS BALAIS ET PROCÉDÉ POUR FAIRE FONCTIONNER UN MOTEUR À COURANT CONTINU SANS BALAIS DANS UN APPAREIL MÉNAGER

(30) Priorität: 22.02.2013 DE 102013202969
(43) Veröffentlichungstag der Anmeldung: 30.12.2015
(73) Patentinhaber: BSH Hausgeräte GmbH, 81739 München (DE)
(72) Erfinder: BAUER, Sebastian, 13587 Berlin (DE); JAHNKE, Heiko, 16341 Panketal (DE); KRAUSCH, Uwe-Jens, 14656 Brieselang (DE); NEHRING, Ulrich, 10715 Berlin (DE); SATTLER, Guido, 14612 Falkensee (DE); SIMON, Marcus, 14612 Falkensee (DE)
(86) Internationale Anmeldenummer: PCT/EP2014/052327
(87) Internationale Veröffentlichungsnummer: WO 2014/128001

(56) Entgegenhaltungen:
- DE-A1-102008 018 356
- DE-C- 749 899
- DE-C1- 4 444 259

## Beschreibung

Die Erfindung betrifft ein Haushaltsgerät, insbesondere einen Wäschetrockner, mit einem als bürstenloser Gleichstrommotor ausgebildeten Antriebsmotor zum Antreiben einer beweglichen Komponente des Haushaltsgeräts. Der Antriebsmotor wird mittels eines Inverters angesteuert, der eine Motorsteuereinheit umfasst, die zum Steuern der Drehzahl des Antriebsmotors ausgebildet ist, wobei der Inverter in zumindest zwei Betriebsmodi betrieben wird, die sich bezüglich der Steuerung der Drehzahl voneinander unterscheiden. Das Haushaltsgerät umfasst auch einen elektrischen Zwischenkreis mit zumindest einem elektrischen Energiespeicher zum Bereitstellen einer elektrischen Versorgungsspannung für die Motorsteuereinheit. Eine zentrale Steuereinrichtung dient zum Steuern von Betriebsprozessen des Haushaltsgeräts und kann den zumindest einen Energiespeicher mit einer Spannungsquelle koppeln und von der Spannungsquelle wieder trennen. Die Erfindung betrifft außerdem ein entsprechendes Verfahren.

Vorliegend richtet sich das Interesse insbesondere auf einen Wäschetrockner, bei welchem zum Antreiben der Wäschetrommel ein bürstenloser Gleichstrommotor (BLDC) bzw. eine Synchronmaschine als Antriebsmotor eingesetzt wird. Es ist bereits Stand der Technik, eine derartige Maschine in einem Wäschetrockner einzusetzen. Die Drehzahl eines bürstenlosen Gleichstrommotors kann bekanntlich mit Hilfe eines Inverters gesteuert werden, der einerseits einen Wechselrichter und andererseits eine Motorsteuereinheit beinhaltet. Der Wechselrichter stellt elektrische Wechselspannungen aus einer Zwischenkreisgleichspannung bereit und wird mittels der Motorsteuereinheit angesteuert. Die Steuerung der Drehzahl des Antriebsmotors erfolgt dabei durch entsprechende Einstellung der Schaltfrequenz des Wechselrichters.

Bei Wäschetrocknern wird neben der Motorsteuereinheit üblicherweise auch eine zentrale elektronische Steuereinrichtung eingesetzt, welche die Trocknungsprozesse steuert. Diese zentrale Steuereinrichtung kann den Inverter aktivieren und wieder deaktivieren, indem der elektrische Zwischenkreis über einen entsprechenden Schalter mit einem Gleichrichter (Spannungsquelle) gekoppelt bzw. von diesem getrennt wird. Wird der Zwischenkreis mit dem Gleichrichter verbunden, liegt am Zwischenkreiskondensator elektrische Spannung an, welche für die Versorgung des Inverters und speziell auch der Motorsteuereinheit mit elektrischer Energie genutzt wird. Wird die Verbindung zum Gleichrichter wieder getrennt, so baut sich die Spannung im Zwischenkreis ab, und der Inverter wird spannungslos. Es ist somit die zentrale Steuereinrichtung, welche entscheidet, zu welchen Zeitpunkten der Inverter und somit der Antriebsmotor betrieben werden sollen.

Der Einsatz eines bürstenlosen Gleichstrommotors ermöglicht in Verbindung mit dem Inverter grundsätzlich eine beliebige Steuerung der Drehzahl des Antriebsmotors. Um diese Steuerung seitens der zentralen Steuereinrichtung umzusetzen, wird im Stand der Technik ein Kommunikationsbus zwischen der zentralen Steuereinrichtung einerseits und der Motorsteuereinheit andererseits benötigt. Ein derartiger Kommunikationsbus steht jedoch nicht bei allen Haushaltsgeräten zur Verfügung und ist mit einem zusätzlichen Aufwand hinsichtlich der einzusetzenden Bauelemente und der Implementierung und somit mit gewissen Nachteilen hinsichtlich der Kosten verbunden.

Das Dokument DE 10 2008 018 356 A1 offenbart einen Wäschetrockner mit einem als bürstenloser Gleichstrommotor ausgebildeten Antriebsmotor, der von einer Motorsteuereinheit in unterschiedlichen Betriebsmodi mit verschiedenen Drehzahlen betreibbar ist. Der Antriebsmotor wird von einem Inverter mit Zwischenkreiskondesator angesteuert.

Das Dokument DE 44 44 259 C1 bezieht sich auf eine elektronische Schaltung zur definierten selektiven Inbetriebsetzung bzw. Ansteuerung von 230V-Wechselstromverbrauchern durch eine mit dem Lichtschalter zu schaltende Schaltleitung.

In dem Dokument DE 749 899 ist eine Fernsteuerung z.B. von Schaltern oder Mehrfachtarifgeräten offenbart, bei der durch Eingriff in die Spannung des zur Kommandoübertragung dienenden Drehstromnetzes, durch kurzzeitige Zuschaltung von Einphasenlasten, insbesondere rein induktiver Natur, an das Hoch- oder Niederspannungsnetz eine Unsymmetrie der den Abnehmern zugeleiteten Drehstromspannung erzeugt wird.

Es ist Aufgabe der Erfindung, eine Lösung aufzuzeigen, wie bei einem Haushaltsgerät der eingangs genannten Gattung der Inverter in zumindest zwei Betriebsmodi, die sich bezüglich der Steuerung der Drehzahl voneinander unterscheiden, auch dann betrieben werden kann, wenn kein Kommunikationsbus zwischen der zentralen Steuereinrichtung und der Motorsteuereinheit zur Verfügung steht.

Diese Aufgabe wird erfindungsgemäß durch ein Haushaltsgerät sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Haushaltsgerät, insbesondere ein Wäschetrockner, umfasst einen als bürstenloser Gleichstrommotor ausgebildeten Antriebsmotor zum Antreiben einer beweglichen Komponente des Haushaltsgeräts. Das Haushaltsgerät umfasst außerdem einen Inverter zur Ansteuerung des Antriebsmotors, wobei der Inverter eine Motorsteuereinheit (z.B. Mikrocontroller) zum Steuern der Drehzahl des Antriebsmotors aufweist und in zumindest zwei Betriebsmodi betreibbar ist, die sich bezüglich der Steuerung der Drehzahl voneinander unterscheiden. Das Haushaltsgerät umfasst auch einen elektrischen Zwischenkreis mit zumindest einem elektrischen Energiespeicher (z.B. Zwischenkreiskondensator) zum Bereitstellen einer elektrischen Versorgungsspannung für die Motorsteuereinheit. Des Weiteren umfasst das Haushaltsgerät eine zentrale elektronische Steuereinrichtung (z.B. digitaler Signalprozessor und/oder Mikrokontroller) zum Steuern von Betriebsprozessen des Haushaltsgeräts. Die Steuereinrichtung ist dazu ausgelegt, den zumindest einen Energiespeicher mit einer Spannungsquelle zu koppeln und von selbiger Spannungsquelle wieder zu trennen. Erfindungsgemäß ist vorgesehen, dass die Motorsteuereinheit das Trennen des Energiespeichers von der Spannungsquelle und das Koppeln des Energiespeichers mit der Spannungsquelle erfasst und nach Erfassen des Koppelns einen der zumindest zwei Betriebsmodi für den nachfolgenden Betrieb des Inverters abhängig davon auswählt, ob das Koppeln innerhalb oder nach Ablauf eines vorgegebenen Zeitintervalls nach dem Trennen erfolgt.

Während im Stand der Technik die Übertragung von Steuerbefehlen von der zentralen Steuereinrichtung an die Motorsteuereinheit über einen speziell zu diesem Zwecke eingesetzten Kommunikationsbus erfolgt, kann bei dem erfindungsgemäßen Haushaltsgerät auf einen derartigen Kommunikationsbus verzichtet werden, und die Umschaltung des Inverters zwischen den verschiedenen Betriebsmodi wird durch Verwendung der ohnehin bereits vorhandenen Komponenten ermöglicht. Die Erfindung macht sich dabei die Tatsche zunutze, dass nach dem Trennen des elektrischen Zwischenkreises von der Spannungsquelle der elektrische Energiespeicher nicht sofort entladen und der Inverter somit nicht sofort spannungslos bzw. stromlos wird, weil elektrische Energie in dem Energiespeicher gespeichert ist und auch nach dem Trennen des Zwischenkreises von der Spannungsquelle eine gewisse Zeitdauer für die Versorgung der Motorsteuereinheit zur Verfügung steht. Während dieser Zeit ist die Funktion der Motorsteuereinheit weiterhin noch gegeben, und erst nach Entladung des Energiespeichers im Zwischenkreis verliert die Motorsteuereinheit ihre gespeicherten Informationen. Die zentrale Steuereinrichtung kann somit die Drehzahlinformationen bzw. die Drehzahlvorgaben an die Motorsteuereinheit übermitteln, indem der Zeitpunkt entsprechend gezielt gewählt wird, zu welchem der Zwischenkreis mit der Spannungsquelle wieder gekoppelt und der Energiespeicher wieder mit elektrischer Spannung beaufschlagt wird. Die Motorsteuereinheit kann dies erfassen und einen der Betriebsmodi abhängig von diesem Zeitpunkt auswählen. Es erübrigt sich somit der Einsatz eines zusätzlichen Kommunikationsbusses zwischen der zentralen Steuereinrichtung einerseits und der Motorsteuereinheit andererseits mit den damit verbundenen Nachteilen hinsichtlich der Kosten und der zusätzlichen Bauelemente.

Insbesondere wird dabei zwischen einem Warmstart und einem Kaltstart der Motorsteuereinheit unterschieden: Wie bereits ausgeführt, wird die Motorsteuereinheit nach dem Trennen des Energiespeichers von der Spannungsquelle nicht sofort spannungslos, da elektrische Energie in dem Energiespeicher gespeichert ist, so dass während dieser Zeit die Motorsteuereinheit noch aktiviert ist und erst nach Entladung des Energiespeichers ihre gespeicherten Informationen verliert. Wird der Energiespeicher mit der Spannungsquelle wieder gekoppelt, bevor er entladen wird, so erfolgt ein Warmstart; unter einem "Kaltstart" wird hingegen ein Neustart nach vollständigem Informationsverlust verstanden, wobei hier die Motorsteuereinheit insbesondere einen Reset durchführt. Diese beiden unterschiedlichen Zustände der Motorsteuereinheit können nun dazu genutzt werden, um für den darauffolgenden Betrieb des Antriebsmotors zwischen unterschiedlichen Betriebsmodi zu unterscheiden. Das vorgegebene Zeitintervall kann somit im Wesentlichen einer Zeitdauer entsprechen, für welche nach dem Trennen des Energiespeichers von der Spannungsquelle die Motorsteuereinheit noch mit der Versorgungsspannung des Energiespeichers versorgt werden kann. So kann beispielsweise ein erster Betriebsmodus für den Betrieb des Antriebsmotors dann gewählt werden, wenn die Motorsteuereinheit vollständig spannungslos war und somit einen Kaltstart durchlaufen hat. Demgegenüber kann ein zweiter Betriebsmodus dann ausgewählt werden, falls der Inverter nicht vollständig spannungslos war und die Motorsteuereinheit somit einen Warmstart durchlaufen hat. Auf diese Weise kann die zentrale Steuereinrichtung den Betriebsmodus des Inverters ohne viel Aufwand durch entsprechende Durchführung eines Kaltstarts oder eines Warmstarts der Motorsteuereinheit auswählen.

Grundsätzlich kann vorgesehen sein, dass die Motorsteuereinheit auf einfache Weise überprüft, ob sie einen Reset durchlaufen hat oder nicht. Wurde ein Reset durchgeführt, so kann ein erster Betriebsmodus ausgewählt werden. Wurde hingegen kein Reset durchgeführt, so kann ein zweiter Betriebsmodus ausgewählt werden.

Die Zeitdauer der Entladung des Energiespeichers kann jedoch im Betrieb des Haushaltsgeräts variieren, nämlich je nachdem, wie viel Energie beim Herunterfahren des Antriebsmotors verbraucht wird. Dies wiederum ist von unterschiedlichen Parametern abhängig, wie insbesondere von der Beladung der Wäschetrommel und der Geschwindigkeit, mit welcher der Antriebsmotor abgebremst wird. Die Entladezeit des Energiespeichers kann außerdem durch Bauteiltoleranzen beeinflusst werden. Um nun eine eindeutige Vorgabe des Betriebsmodus seitens der zentralen Steuereinrichtung bzw. eine eindeutige Differenzierung zwischen einem Warmstart und einem Kaltstart zu ermöglichen, ist in einer Ausführungsform vorgesehen, dass, falls das Koppeln nach Ablauf des vorgegebenen Zeitintervalls nach dem Trennen erfolgt und die Motorsteuereinheit somit stromlos war, ein erster Betriebsmodus ausgewählt wird, und falls das Koppeln innerhalb des vorgegebenen Zeitintervalls nach dem Trennen erfolgt und somit kein Reset stattfindet, einer der Betriebsmodi abhängig von einem Zählerwert ausgewählt wird, der in der Motorsteuereinheit implementiert wird.

Allgemein gesagt kann in der Motorsteuereinheit ein Zählerwert implementiert werden, mittels welchem eine Zeitdauer nach dem Trennen des Energiespeichers von der Spannungsquelle erfasst wird. Dann kann die Motorsteuereinheit einen der zumindest zwei Betriebsmodi für den nachfolgenden Betrieb des Inverters abhängig davon auswählen, ob beim Koppeln des Energiespeichers mit der Spannungsquelle der Zählerwert kleiner oder größer als ein vorgegebener Grenzwert ist. Ist nach dem Trennen des Energiespeichers von der Spannungsquelle selbiger Energiespeicher noch nicht entladen und wird die Motorsteuereinheit somit weiterhin mit elektrischer Energie versorgt, so erfolgt die Auswahl des Betriebsmodus abhängig von dem Zählerwert, wobei entscheidend ist, wie hoch dieser Zählerwert zum Zeitpunkt des erneuten Verbindens des Energiespeichers mit der Spannungsquelle ist. Ist der Zählerwert größer als der genannte Grenzwert, so kann ein erster Betriebsmodus ausgewählt werden, welcher dem Kaltstart zugeordnet ist. Liegt der Zählerwert unterhalb des Grenzwerts, kann ein dem Warmstart zugeordneter zweiter Betriebsmodus ausgewählt werden. Mit dem genannten Grenzwert wird somit mit anderen Worten virtuell ein Zeitpunkt definiert, zu welchem der Energiespeicher frühestens entladen werden kann und die Motorsteuereinheit somit frühestens stromlos wird. Der Grenzwert wird bevorzugt so festgelegt, dass er einer minimal möglichen Entladezeit entspricht oder ein wenig kleiner als diese Mindestentladezeit ist, die im ungünstigsten Fall für die Entladung des Energiespeichers benötigt wird. Somit ist sichergestellt, dass der Grenzwert stets vor dem Zeitpunkt liegt, zu welchem der Energiespeicher tatsächlich entladen und die Motorsteuereinheit stromlos wird. Es kann somit eindeutig zwischen den zumindest zwei Betriebsmodi unterschieden werden.

Die Implementierung des genannten Zählerwerts ermöglicht auch folgende Ausführungsform: Es können insgesamt mindestens drei Betriebsmodi vorgesehen sein, die sich bezüglich der Steuerung der Drehzahlen untereinander unterscheiden. Unterhalb des genannten Grenzwerts können dann zumindest zwei Zeitintervalle definiert werden. Falls beim Koppeln des Energiespeichers mit der Spannungsquelle der Zählerwert kleiner als der Grenzwert ist, kann einer der Betriebsmodi für den Betrieb des Inverters abhängig davon ausgewählt werden, in welchem der zumindest zwei Zeitintervalle der Zählerwert beim Koppeln des Energiespeichers mit der Spannungsquelle liegt. Das gesamte Zeitintervall unterhalb des Grenzwerts kann grundsätzlich in beliebig viele Zeitintervalle unterteilt werden, so dass im Prinzip eine beliebige Anzahl von verschiedensten Betriebsmodi implementiert werden kann. Dies hat insbesondere Vorteile hinsichtlich der Prozesstechnik und der Pflege der Wäschestücke, weil verschiedene Betriebsprogramme, insbesondere verschiedene Trocknungsprogramme, zur Verfügung bereitgestellt werden können, die speziell für unterschiedliche Arten von Wäschestücken entwickelt sind und sich in dem Verlauf der Drehzahl des Antriebsmotors untereinander unterscheiden. Es ist auch möglich, innerhalb eines einzelnen Betriebsprogramms unterschiedliche Drehzahlwerte vorzusehen.

In einer Ausführungsform kann vorgesehen sein, dass die zumindest zwei Betriebsmodi zumindest einen ersten Betriebsmodus, in welchem der Antriebsmotor bei einer ersten Drehzahl betrieben wird, und einen zweiten Betriebsmodus umfassen, in welchem der Antriebsmotor bei einer höheren zweiten Drehzahl betrieben wird. Somit kann die Drehzahl des Antriebsmotors im Betrieb des Haushaltsgeräts auf zwei voneinander verschiedene Drehzahlwerte geregelt werden. Wird einer der Betriebsmodi aktiviert, so wird die Drehzahl in diesem Betriebsmodus bevorzugt auf einen konstanten Wert geregelt.

Es erweist sich als vorteilhaft, wenn der erste Betriebsmodus mit der geringeren Drehzahl dann ausgewählt wird, wenn das Koppeln des Energiespeichers mit der Spannungsquelle nach Ablauf des vorgegebenen Zeitintervalls nach dem Trennen erfolgt (d.h. Kaltstart). Bei einer Inbetriebnahme des Haushaltsgeräts und somit bei einer ersten Aktivierung der Motorsteuereinheit wird somit stets dieser erste Betriebsmodus ausgewählt und damit auch die geringere Drehzahl eingestellt. Dies erweist sich insbesondere bei einem Wäschetrockner hinsichtlich der Prozesstechnik als vorteilhaft, weil zu diesem Zeitpunkt die Feuchtigkeit der Wäschestücke maximal ist und durch die geringe Drehzahl ein schnelles Aufheizen der Wäschestücke gewährleistet werden kann. Die Drehzahl des Antriebsmotors kann dann während des Trocknungsprozesses an den aktuellen Trocknungsgrad der Wäschestücke angepasst werden bzw. die Umschaltung zwischen verschiedenen Betriebsmodi des Inverters kann in Abhängigkeit von dem aktuellen Trocknungsgrad der Wäschestücke erfolgen.

Also kann in einer Ausführungsform vorgesehen sein, dass die zentrale Steuereinrichtung den aktuellen Trocknungsgrad der Wäschestücke erfasst und von dem ersten Betriebsmodus zu dem zweiten Betriebsmodus in Abhängigkeit von dem Trocknungsgrad wechselt, nämlich insbesondere dann, wenn der Trocknungsgrad einen vorgegebenen Schwellwert erreicht. Somit können die Wäschestücke geschont werden.

Bevorzugt können sich die zumindest zwei Betriebsmodi auch in der Steilheit bzw. dem Anstieg einer Kennlinie voneinander unterscheiden, welche zum Hoch- und/oder Herunterfahren des Antriebsmotors dient. Auch somit ergeben sich Vorteile hinsichtlich der Prozesstechnik.

Vorzugsweise ist der Antriebsmotor - beispielsweise über einen Riemen - mit einer Wäschetrommel gekoppelt und zum Antreiben der Wäschetrommel ausgebildet.

Ein erfindungsgemäßes Verfahren dient zum Betreiben eines als bürstenloser Gleichstrommotor ausgebildeten Antriebsmotors, mittels welchem eine bewegliche Komponente eines Haushaltsgeräts, insbesondere eines Wäschetrockners, angetrieben wird, wobei der Antriebsmotor mittels eines Inverters angesteuert wird und die Drehzahl des Antriebsmotors mittels einer Motorsteuereinheit des Inverters gesteuert wird, wobei die Motorsteuereinheit in zumindest zwei Betriebsmodi betrieben wird, die sich bezüglich der Steuerung der Drehzahl voneinander unterscheiden, wobei mittels zumindest eines elektrischen Energiespeichers eine elektrische Versorgungsspannung für die Motorsteuereinheit bereitgestellt wird, und wobei mittels einer zentralen Steuereinrichtung der zumindest eine Energiespeicher mit einer Spannungsquelle gekoppelt und von dieser wieder getrennt wird. Die Motorsteuereinheit erfasst das Trennen des Energiespeichers von und das Koppeln des Energiespeichers mit der Spannungsquelle und wählt nach Erfassen des Koppels einen der zumindest zwei Betriebsmodi für den nachfolgenden Betrieb des Inverters abhängig davon aus, ob das Koppeln innerhalb oder nach Ablauf eines vorgegebenen Zeitintervalls nach dem Trennen erfolgt.

Die mit Bezug auf das erfindungsgemäße Haushaltsgerät vorgestellten bevorzugten Ausführungsformen und deren Vorteile gelten entsprechend für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Blockschaltbild eines Haushaltsgeräts gemäß einer ersten Ausführungsform der Erfindung;
- Fig. 2: in schematischer Darstellung ein Blockschaltbild eines Haushaltsgeräts gemäß einer zweiten Ausführungsform der Erfindung; und
- Fig. 3: zeitliche Verläufe, anhand derer ein Verfahren gemäß einer Ausführungsform der Erfindung näher erläutert wird.

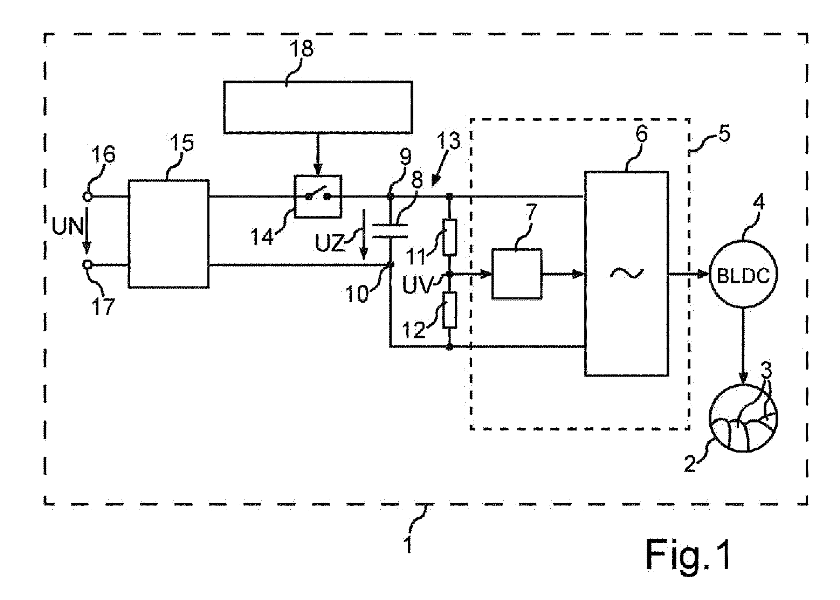

Ein in Fig. 1 in schematischer Darstellung gezeigtes Haushaltsgerät 1 ist im Ausführungsbeispiel ein Wäschetrockner. Als bewegliche Komponente befindet sich im Haushaltsgerät 1 eine Wäschetrommel 2, welche zur Aufnahme von Wäschestücken 3 dient. Die Wäschetrommel 2 wird mittels eines Antriebsmotors 4 angetrieben, der als bürstenloser Gleichstrommotor BLDC ausgebildet ist. Der Antriebsmotor 4 wird seinerseits mit Hilfe eines Inverters 5 angesteuert, welcher einen Wechselrichter 6 sowie eine Motorsteuereinheit 7 aufweist. Die Motorsteuereinheit 7 steuert dabei elektrische Schalter des Wechselrichters 6 an und kann somit die Drehzahl des Antriebsmotors 4 steuern.

Der Wechselrichter 6 erzeugt elektrische Wechselspannungen für die Phasenstränge des Antriebsmotors 4. Der Antriebsmotor 4 kann dabei beispielsweise drei Phasenstränge umfassen und somit dreiphasig ausgeführt sein. Die Wechselspannungen werden aus einer Zwischenkreisgleichspannung UZ bereitgestellt, welche an einem Zwischenkreiskondensator 8 als Energiespeicher anliegt, nämlich zwischen einem Schaltungsknoten 9 einerseits und einem elektrischen Bezugspotential 10 (Masse) andererseits. Mit elektrischer Energie aus dem Zwischenkreiskondensator 8 wird auch die Motorsteuereinheit 7 versorgt, welche zu diesem Zwecke mit dem Zwischenkreiskondensator 8 beispielsweise über einen Spannungsteiler verbunden ist, der aus zwei oder mehreren Widerständen 11, 12 gebildet ist. Die Motorsteuereinheit 7 wird mit einer Versorgungsspannung UV versorgt, welche einen geringeren Spannungswert als die Zwischenkreisgleichspannung UZ aufweist.

Der Zwischenkreiskondensator 8 ist Bestandteil eines elektrischen Zwischenkreises 13, welcher über eine Schalteinrichtung 14 in Form zumindest eines elektrischen Schalters mit einer Spannungsquelle 15 verbunden werden kann, die ihrerseits an Netzanschlüsse 16, 17 angeschlossen ist. Zwischen den Netzanschlüssen 16, 17 liegt eine Netzspannung UN an, beispielsweise eine Wechselspannung von 230 V. Die Spannungsquelle 15 kann beispielsweise einen Netzfilter, einen Gleichrichter und/oder ein Netzteil beinhalten, so dass aus der Netzspannung UN eine gleichgerichtete Spannung erzeugt wird

Zur Steuerung von Trocknungsprozessen des Haushaltsgeräts 1 ist eine zentrale elektronische Steuereinrichtung 18 bereitgestellt, welche unter anderem die Schalteinrichtung 14 ansteuert. Dies bedeutet, dass mittels der zentralen Steuereinrichtung 18 der Zwischenkreis 13 mit der Spannungsquelle 15 gekoppelt und von dieser wieder getrennt werden kann. Die Motorsteuereinheit 7 übernimmt dabei lediglich die Aufgabe der Regelung der Drehzahl des Antriebsmotors 4 auf einen vorgegebenen Wert. Ob der Antriebsmotor 4 zu einem bestimmten Zeitpunkt während des Trocknungsprozesses überhaupt betrieben werden soll oder nicht, entscheidet die zentrale Steuereinrichtung 18: Wird die Schalteinrichtung 14 geschlossen, wird die Wäschetrommel 2 angetrieben; wird die Schalteinrichtung 14 geöffnet, kommt die Wäschetrommel 2 zum Stillstand.

Üblicherweise wird bei Haushaltsgeräten 1 die Motorsteuereinheit 7 so ausgelegt, dass sie auch einen Ausfall der Netzspannung UN anhand des aktuellen Spannungswerts der Versorgungsspannung UV detektieren kann. Wird ein solcher Ausfall detektiert, kann der Antriebsmotor 4 noch geregelt heruntergefahren werden. Die Motorsteuereinheit 7 erfasst also den jeweils augenblicklichen Spannungswert der Versorgungsspannung UV und kann somit auch auf den aktuellen Zustand der Schalteinrichtung 14 zurückschließen.

Die Motorsteuereinheit 7 kann nun in zumindest zwei verschiedenen Betriebsmodi betrieben werden, die sich einerseits in dem Drehzahlwert, auf welchen die Drehzahl des Antriebsmotors 4 geregelt wird, und andererseits optional auch in der Steilheit der Hochfahrkennlinie und/oder der Herunterfahrkennlinie bzw. Verzögerungskennlinie voneinander unterscheiden.

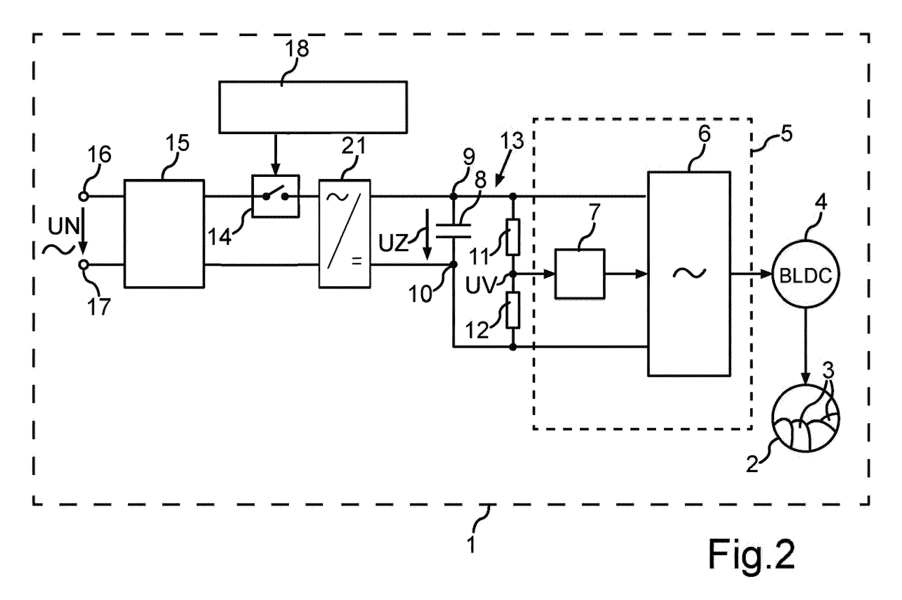

Gemäß einer alternativen Ausführungsform der Erfindung, die in Figur 2 beispielhaft dargestellt ist, kann die Gleichrichtung zur Erzeugung der Zwischenkreisspannung auch nach dem Schaltelement 14, vor dem Zwischenkreiskondensator 8 erfolgen. Dazu kann beispielsweise eine Wandlereinheit 19 vorgesehen sein, die einen Gleichrichter enthält und zwischen der Schalteinrichtung 14 und dem Schaltungsknoten 9 sowie zwischen der Spannungsquelle 15 und dem Schaltungsknoten 10 geschaltet ist. Die Wandlereinheit 19 kann weitere Netzfilterelemente enthalten, die in Fig. 2 nicht explizit dargestellt sind. In dieser Konfiguration wird das Schaltelement 14 zum Einschalten des Inverters 5 mit Wechselspannung belastet. Die Wandlereinheit 19 kann auch Spannungswandler enthalten.

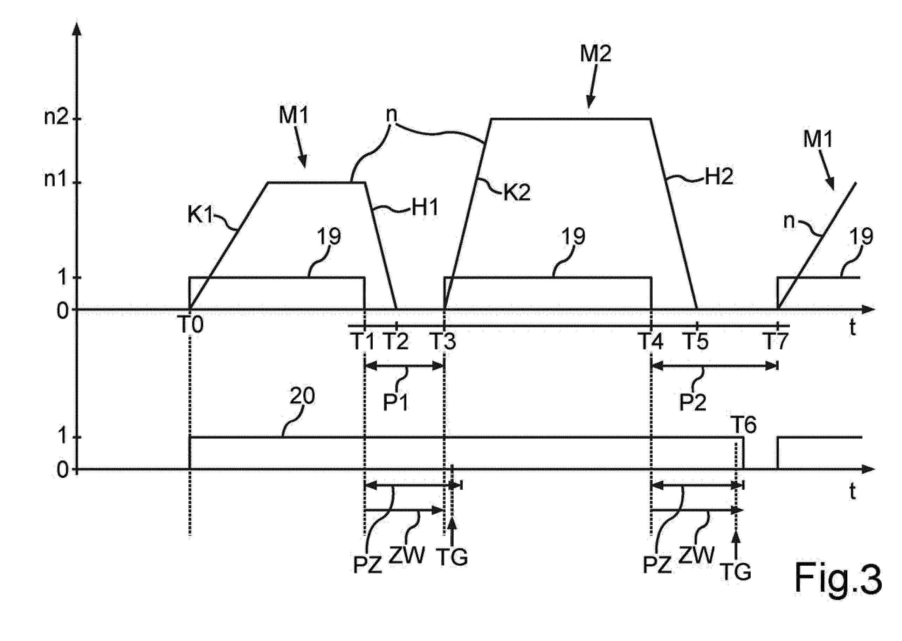

Ein Verfahren gemäß einer Ausführungsform der Erfindung wird nun Bezug nehmend auf Fig. 3 näher erläutert:
In Fig. 3 sind unterschiedliche Signalverläufe über der Zeit t dargestellt, die sich während eines Trocknungsprozesses ergeben. Im oberen Teil von Fig. 2 ist ein zeitlicher Verlauf der Drehzahl n des Antriebsmotors 4 dargestellt. Bei dem Inverter 5 wird dabei zwischen einem ersten Betriebsmodus M1 und einem zweiten Betriebsmodus M2 unterschieden, in denen die Drehzahl n auf unterschiedliche Sollwerte eingestellt wird, nämlich einerseits auf einen ersten Drehzahlwert n1 und andererseits auf einen höheren zweiten Drehzahlwert n2. Die Auswahl eines der Betriebsmodi M1, M2 wird durch die zentrale Steuereinrichtung 18 vorgegeben.

Bei der Vorgabe des aktuellen Betriebsmodus M1, M2 durch die zentrale Steuereinrichtung 18 wird die Tatsache genutzt, dass die Motorsteuereinheit 7 nach dem Öffnen der Schalteinrichtung 14 nicht sofort stromlos wird, weil elektrische Energie im Zwischenkreiskondensator 8 und gegebenenfalls in weiteren, kleineren Kondensatoren gespeichert ist. Während dieser Zeit ist die Funktion der Motorsteuereinheit 7 noch vollständig gegeben, sie erkennt jedoch, dass die Schalteinrichtung 14 geöffnet wurde. Erst nach Entladung des Zwischenkreiskondensators 8 sowie gegebenenfalls nach Entladung weiterer Kondensatoren in der Versorgungskette zur Motorsteuereinheit 7 verliert diese alle gespeicherten Informationen. Ein erneutes Schließen der Schalteinrichtung 14 vor dieser Zeit wird als "Warmstart" betrachtet; ein Schließen der Schalteinrichtung 14 nach dem Informationsverlust wird als "Kaltstart" bezeichnet.

In Fig. 3 ist des Weiteren ein Verlauf 19 dargestellt, mit welchem der aktuelle Zustand der Schalteinrichtung 14 veranschaulicht wird. Der Zustand "0" bedeutet, dass die Schalteinrichtung 14 geöffnet ist, während der Zustand "1" eine geschlossene Schalteinrichtung 14 symbolisiert. Im unteren Teil von Fig. 3 ist des Weiteren ein Verlauf 20 gezeigt, welcher symbolisiert, ob der Zwischenkreiskondensator 8 vollständig entladen ist oder nicht und somit ob die Motorsteuereinheit 7 stromlos oder noch aktiv ist. Der Zustand "1" bedeutet, dass die Motorsteuereinheit 7 mit elektrischer Energie versorgt wird. Der Zustand "0" bedeutet wiederum, dass die Motorsteuereinheit 7 stromlos ist.

Zu einem Zeitpunkt T0 erfolgt die Inbetriebnahme des Haushaltsgeräts 1, und die Schalteinrichtung 14 wird geschlossen. Die Motorsteuereinheit 7 erkennt, dass keine Informationen zur Verfügung stehen bzw. alle Register gelöscht sind. Wird dieser Kaltstart detektiert, so schaltet die Motorsteuereinheit 7 den ersten Betriebsmodus M1 ein, so dass der Antriebsmotor 4 gemäß einer ersten Hochfahrkennlinie K1 auf den ersten Drehzahlwert n1 hochgefahren und die Drehzahl n auf den ersten Drehzahlwert n1 geregelt wird.

Zu einem Zeitpunkt T1 öffnet die zentrale Steuereinrichtung 18 die Schalteinrichtung 14, was durch die Motorsteuereinheit 7 anhand der Versorgungsspannung UV detektiert wird. Als Reaktion darauf wird der Antriebsmotor 4 mittels der Motorsteuereinheit 7 geregelt heruntergefahren und somit gemäß einer ersten Herunterfahrkennlinie H1 abgebremst, nämlich auf den Nullwert. Zum Zeitpunkt T2 wird der Stillstand des Antriebsmotors 4 erreicht.

Zum Zeitpunkt T1 beginnt die Motorsteuereinheit 7 auch die Zeitdauer zu erfassen, welche seit dem Zeitpunkt T1 verstrichen ist. Dazu wird ein Zählerwert ZW implementiert, welcher ab dem Zeitpunkt T1 mit der Zeit inkrementiert wird.

Nach dem Zeitpunkt T1 kann die Motorsteuereinheit 7 nur so lange aktiv bleiben, bis der Zwischenkreiskondensator 8 entladen wird. Die Entladezeit des Zwischenkreiskondensators 8 wird als "Pufferzeit" bezeichnet, welche in Fig. 3 mit PZ gekennzeichnet ist.

Wird nach Ablauf einer ersten Pausenzeit P1 nach dem Zeitpunkt T1 die Schalteinrichtung 14 zu einem weiteren Zeitpunkt T3 wieder geschlossen, so überprüft die Motorsteuereinheit 7, ob der Zählerwert kleiner oder größer als ein vorgegebener Grenzwert TG ist. Diese Überprüfung erfolgt selbstverständlich nur unter der Voraussetzung, dass die Pufferzeit PZ noch nicht abgelaufen ist und die Motorsteuereinheit 7 noch aktiviert ist. Der Grenzwert TG wird dabei so gewählt, dass er ein wenig kleiner als die minimal mögliche Pufferzeit PZ ist oder dieser minimal möglichen Pufferzeit PZ entspricht. Ergibt die Überprüfung zum Zeitpunkt T3, dass der Zählerwert ZW kleiner als der Grenzwert TG ist, so wird der zweite Betriebsmodus M2 aktiviert, so dass der Antriebsmotor 4 gemäß einer zweiten Hochfahrkennlinie K2 hochgefahren und die Drehzahl n auf den zweiten Drehzahlwert n2 geregelt wird. Durch Implementierung des Zählerwerts ZW kann die Motorsteuereinheit 7 somit ohne viel Aufwand feststellen, dass die Schalteinrichtung 14 noch vor Ablauf der Pufferzeit PZ geschlossen wird und somit ein Warmstart erfolgen soll.

Zu einem weiteren Zeitpunkt T4 wird die Schalteinrichtung 14 wieder geöffnet, wie dies in Fig. 3 anhand des Verlaufs 19 zu erkennen ist. Die Motorsteuereinheit 7 erkennt dies und beginnt gleichzeitig, den Zählerwert ZW zu inkrementieren und außerdem den Antriebsmotor 4 gemäß einer zweiten Herunterfahrkennlinie H2 herunterzufahren, welche auch der ersten Kennlinie H1 entsprechen kann. Zu einem Zeitpunkt T5 erreicht die Drehzahl n des Antriebsmotors 4 den Nullwert. Wie aus Fig. 3 hervorgeht, endet die Pufferzeit PZ zu einem Zeitpunkt T6, bevor die Schalteinrichtung 14 wieder geschlossen wird. Dies bedeutet, dass der Zwischenkreiskondensator 8 zum Zeitpunkt T6 entladen wird und die Motorsteuereinheit 7 somit stromlos wird. Zum Zeitpunkt T6 verliert die Motorsteuereinheit 7 somit alle gespeicherten Informationen einschließlich des Zählerwerts ZW, welcher in der Zwischenzeit auch den Grenzwert TG überschritten hat. Wird die Schalteinrichtung 14 nun nach Ablauf einer zweiten Pausenzeit P2 zu einem weiteren Zeitpunkt T7 nach dem Zeitpunkt T6 wieder geschlossen und die Motorsteuereinheit 7 in Betrieb genommen, so erfolgt ein Kaltstart, was bedeutet, dass die Motorsteuereinheit 7 den ersten Betriebsmodus M1 aktiviert.

Wird der Grenzwert TG so festgelegt, dass er gleich oder ein wenig kleiner als die minimal mögliche Pufferzeit PZ ist, so kann es - wenn auch selten - grundsätzlich vorkommen, dass die Schalteinrichtung 14 zu einem Zeitpunkt geschlossen wird, zu welchem der Zählerwert ZW den Grenzwert TG bereits überschritten hat, die Pufferzeit PZ jedoch noch nicht abgelaufen ist. In diesem Falle hat die Motorsteuereinheit 7 noch keinen Reset durchlaufen, so dass die Informationen einschließlich des Zählerwerts ZW noch nicht verloren sind. In einem derartigen Fall kann die Motorsteuereinheit 7 dazu ausgelegt sein, dies als einen Kaltstart zu interpretieren und den ersten Betriebsmodus M1 zu aktivieren.

Das Vorsehen des Zählerwerts ZW ermöglicht auch die Bereitstellung mehrerer Betriebsmodi. So kann innerhalb der Pufferzeit PZ bzw. unterhalb des Grenzwerts TG eine Vielzahl von kleineren Zeitintervallen vorgesehen sein, und die Motorsteuereinheit 7 kann zum Zeitpunkt des Schließens der Schalteinrichtung 14 überprüfen, in welches der Zeitintervalle der aktuelle Zählerwert ZW fällt. Jedes Zeitintervall kann dabei einem anderen Betriebsmodus zugeordnet sein, und die Betriebsmodi können sich mindestens in dem Sollwert voneinander unterscheiden, auf welchen die Drehzahl n geregelt werden soll.

Wie ferner aus Fig. 3 hervorgeht, wird nach dem Kaltstart der Betriebsmodus M1 aktiviert, in welchem die Drehzahl n auf den geringeren Drehzahlwert n1 geregelt wird. Diese geringere Drehzahl erweist sich insbesondere zu Beginn eines Trocknungsprozesses als vorteilhaft, weil zu diesem Zeitpunkt T0 die Feuchtigkeit der Wäschestücke 3 maximal ist und die Wäschestücke 3 somit relativ schnell auf eine hohe Temperatur aufgeheizt werden können. Erreicht der Trocknungsgrad der Wäschestücke 3 einen vorgegebenen Wert, so kann die zentrale Steuereinrichtung 18 einen Wechsel von dem ersten Betriebsmodus M1 zum zweiten Betriebsmodus M2 veranlassen, indem die Schalteinrichtung 14 geöffnet und wieder geschlossen wird, bevor der Zählerwert ZW den Grenzwert TG erreicht.

Zusammenfassend ermöglicht das beschriebene Verfahren die Regelung der Drehzahl n des Antriebsmotors 4 auf unterschiedliche Sollwerte, ohne dass eine spezielle Datenkommunikation zwischen der zentralen Steuereinrichtung 18 und der Motorsteuereinheit 7 bereitgestellt zu werden braucht. Die Übertragung von Steuerbefehlen an die Motorsteuereinheit 7 erfolgt durch entsprechendes Schalten der Schalteinrichtung 14 und somit durch Auswahl eines Kaltstarts oder eines Warmstarts der Motorsteuereinheit 7.

### Bezugszeichenliste

- 1: Haushaltsgerät
- 2: Wäschetrommel
- 3: Wäschestücke
- 4: Antriebsmotor
- 5: Inverter
- 6: Wechselrichter
- 7: Motorsteuereinheit
- 8: Zwischenkreiskondensator
- 9: Schaltungsknoten
- 10: Bezugspotential
- 11: Widerstand
- 12: Widerstand
- 13: Zwischenkreis
- 14: Schalteinrichtung
- 15: Spannungsquelle
- 16: Netzanschluss
- 17: Netzanschluss
- 18: Steuereinrichtung
- 19: Verlauf
- 20: Verlauf
- 21: Wandlereinheit
- n: Drehzahl
- n1: erster Drehzahlwert
- n2: zweiter Drehzahlwert
- t: Zeit
- H1: Herunterfahrkennlinie
- H2: Herunterfahrkennlinie
- K1: Hochfahrkennlinie
- K2: Hochfahrkennlinie
- M1: erster Betriebsmodus
- M2: zweiter Betriebsmodus
- T0: Zeitpunkt
- T1: Zeitpunkt
- T2: Zeitpunkt
- T3: Zeitpunkt
- T4: Zeitpunkt
- T5: Zeitpunkt
- T6: Zeitpunkt
- T7: Zeitpunkt
- BLDC: bürstenloser Gleichstrommotor
- P1: erste Pausenzeit
- P2: zweite Pausenzeit
- PZ: Pufferzeit
- TG: Grenzwert
- UN: Netzspannung
- UZ: Zwischenkreisgleichspannung
- UV: Versorgungsspannung
- ZW: Zählerwert

## Patentansprüche

1. Haushaltsgerät (1), insbesondere Wäschetrockner, mit einem als bürstenloser Gleichstrommotor ausgebildeten Antriebsmotor (4) zum Antreiben einer beweglichen Komponente (2) des Haushaltsgeräts (1), mit einem Inverter (5) zur Ansteuerung des Antriebsmotors (4), wobei der Inverter (5) eine Motorsteuereinheit (7) zum Steuern der Drehzahl (n) des Antriebsmotors (4) aufweist und in zumindest zwei Betriebsmodi (M1, M2) betreibbar ist, die sich bezüglich der Steuerung der Drehzahl (n) voneinander unterscheiden, mit einem elektrischen Zwischenkreis (13) mit zumindest einem elektrischen Energiespeicher (8) zum Bereitstellen einer elektrischen Versorgungsspannung (UV) für die Motorsteuereinheit (7), und mit einer zentralen Steuereinrichtung (18) zum Steuern von Betriebsprozessen des Haushaltsgeräts (1), **dadurch gekennzeichnet, dass** die zentrale Steuerungseinheit (18) dazu ausgelegt ist, den zumindest einen Energiespeicher (8) mit einer Spannungsquelle (15) zu koppeln und von selbiger Spannungsquelle (15) wieder zu trennen, wobei die Motorsteuereinheit (7) dazu ausgelegt ist, das Trennen des Energiespeichers (8) von und das Koppeln des Energiespeichers (8) mit der Spannungsquelle (15) zu erfassen und nach Erfassen des Koppelns einen der zumindest zwei Betriebsmodi (M1, M2) für den nachfolgenden Betrieb des Inverters (5) abhängig davon auszuwählen, ob das Koppeln innerhalb oder nach Ablauf eines vorgegebenen Zeitintervalls (PZ) nach dem Trennen erfolgt.

2. Haushaltsgerät (1) nach Anspruch 1, **dadurch gekennzeichnet, dass** das vorgegebene Zeitintervall (PZ) einer Zeitdauer entspricht, für welche nach dem Trennen des Energiespeichers (8) von der Spannungsquelle (15) die Motorsteuereinheit (7) noch mit der Versorgungsspannung (UV) des Energiespeichers (8) versorgbar ist.

3. Haushaltsgerät (1) nach Anspruch 2, **dadurch gekennzeichnet, dass** die zumindest zwei Betriebsmodi (M1, M2) zumindest einen ersten Betriebsmodus (M1) und einen zweiten Betriebsmodus (M2) umfassen, und dass die Motorsteuereinheit (7) dazu ausgelegt ist, falls das Koppeln nach Ablauf des vorgegebenen Zeitintervalls (PZ) nach dem Trennen erfolgt, den ersten Betriebsmodus (M1) auszuwählen, und falls das Koppeln innerhalb des vorgegebenen Zeitintervalls (PZ) nach dem Trennen erfolgt, einen der Betriebsmodi (M1, M2) abhängig von einem Zählerwert (ZW) auszuwählen.

4. Haushaltsgerät (1) nach einem der vorhergehenden Ansprüche, **dadurch gekennzeichnet, dass** die Motorsteuereinheit (7) dazu ausgelegt ist, mittels eines Zählerwerts (ZW) eine Zeitdauer nach dem Trennen des Energiespeichers (8) von der Spannungsquelle (15) zu erfassen und einen der zumindest zwei Betriebsmodi (M1, M2) für den nachfolgenden Betrieb des Inverters (5) abhängig davon auszuwählen, ob beim Koppeln des Energiespeichers (8) mit der Spannungsquelle (15) der Zählerwert (ZW) kleiner oder größer als ein vorgegebener Grenzwert (TG) ist.

5. Haushaltsgerät (1) nach Anspruch 4, **dadurch gekennzeichnet, dass** der Inverter (5) in zumindest drei Betriebsmodi (M1, M2) betreibbar ist, die sich bezüglich der Steuerung der Drehzahl (n) untereinander unterscheiden, und dass unterhalb des Grenzwerts (TG) zumindest zwei Zeitintervalle vorgegeben sind, wobei die Motorsteuereinheit (7) dazu ausgelegt ist, falls beim Koppeln des Energiespeichers (8) mit der Spannungsquelle (15) der Zählerwert (ZW) kleiner als der Grenzwert (TG) ist, einen der Betriebsmodi (M1, M2) für den Betrieb des Inverters (5) abhängig davon auszuwählen, in welchem der zumindest zwei Zeitintervalle der Zählerwert (ZW) beim Koppeln des Energiespeichers (8) mit der Spannungsquelle (15) liegt.

6. Haushaltsgerät (1) nach einem der vorhergehenden Ansprüche, **dadurch gekennzeichnet, dass** die zumindest zwei Betriebsmodi (M1, M2) zumindest einen ersten Betriebsmodus (M1) und einen zweiten Betriebsmodus (M2) umfassen, und die Motorsteuereinheit (7) dazu ausgelegt ist, in dem ersten Betriebsmodus (M1) den Antriebsmotor (4) bei einem ersten Drehzahlwert (n1) und in dem zweiten Betriebsmodus (M2) den Antriebsmotor (4) bei einem bezüglich des ersten Drehzahlwerts (n1) höheren zweiten Drehzahlwert (n2) zu betreiben.

7. Haushaltsgerät (1) nach Anspruch 6, **dadurch gekennzeichnet, dass** die Motorsteuereinheit (7) dazu ausgelegt ist, falls das Koppeln des Energiespeichers (8) mit der Spannungsquelle (15) nach Ablauf des vorgegebenen Zeitintervalls (PZ) nach dem Trennen erfolgt, den ersten Betriebsmodus (M1) für den nachfolgenden Betrieb auszuwählen.

8. Haushaltsgerät (1) nach Anspruch 6 oder 7, **dadurch gekennzeichnet, dass** die zentrale Steuereinrichtung (18) dazu ausgelegt ist, von dem ersten Betriebsmodus (M1) zu dem zweiten Betriebsmodus (M2) in Abhängigkeit von einem Trocknungsgrad von Wäschestücken (3) zu wechseln.

9. Haushaltsgerät (1) nach einem der vorhergehenden Ansprüche, **dadurch gekennzeichnet, dass** sich die zumindest zwei Betriebsmodi (M1, M2) in der Steilheit einer Kennlinie (K1, K2, H1, H2) zum Hoch- und/oder Herunterfahren des Antriebsmotors (4) voneinander unterscheiden.

10. Haushaltsgerät (1) nach einem der vorhergehenden Ansprüche, **dadurch gekennzeichnet, dass** der Antriebsmotor (4) mit einer Wäschetrommel als bewegliche Komponente (2) gekoppelt und zum Antreiben der Wäschetrommel ausgebildet ist.

11. Verfahren zum Betreiben eines als bürstenloser Gleichstrommotor ausgebildeten Antriebsmotors (4), mittels welchem eine bewegliche Komponente (2) eines Haushaltsgeräts (1), insbesondere eines Wäschetrockners, angetrieben wird, wobei der Antriebsmotor (4) mittels eines Inverters (5) angesteuert wird und die Drehzahl (n) des Antriebsmotors (4) mittels einer Motorsteuereinheit (7) des Inverters (5) gesteuert wird, wobei der Inverter (5) in zumindest zwei Betriebsmodi (M1, M2) betrieben wird, die sich bezüglich der Steuerung der Drehzahl (n) voneinander unterscheiden, und wobei mittels zumindest eines elektrischen Energiespeichers (8) eine elektrische Versorgungsspannung (UV) für die Motorsteuereinheit (7) bereitgestellt wird, **dadurch gekennzeichnet, dass** mittels einer zentralen Steuereinrichtung (18) der zumindest eine Energiespeicher (8) mit einer Spannungsquelle (15) gekoppelt und von selbiger Spannungsquelle (15) wieder getrennt wird, wobei mittels der Motorsteuereinheit (7) das Trennen des Energiespeichers (8) von und das Koppeln des Energiespeichers (8) mit der Spannungsquelle (15) erfasst wird und nach Erfassen des Koppelns einer der zumindest zwei Betriebsmodi (M1, M2) für den nachfolgenden Betrieb des Inverters (5) abhängig davon ausgewählt wird, ob das Koppeln innerhalb oder nach Ablauf eines vorgegebenen Zeitintervalls (PZ) nach dem Trennen erfolgt.

## Claims

1. Domestic appliance (1), in particular tumble dryer having a drive motor (4) embodied as a brushless direct-current motor for driving a moveable component (2) in the domestic appliance (1), having an inverter (5) for controlling the drive motor (4), wherein the inverter (5) has a motor control unit (7) for controlling the rotational speed (n) of the drive motor (4) and can be operated in at least two operating modes (M1, M2), which differ from one another with respect to the control of the rotational speed (n), having an electrical intermediate circuit (13) with at least one electrical energy store (8) for providing an electrical supply voltage (UV) for the motor control unit (7) and having a central control device (18) for controlling operating processes of the domestic appliance (1), **characterised in that** the central control unit (18) is designed to couple the at least one energy store (8) to a voltage source (15) and disconnect the same again from the same voltage source (15), wherein the motor control unit (7) is designed to detect the disconnection of the energy store (8) from and the coupling of the energy store (8) to the voltage source (15) and after detecting the coupling of one of the at least two operating modes (M1, M2) for the subsequent operation of the inverter (5) to select independently thereof whether the coupling occurs within or after the expiration of a specified time interval (PZ) after the disconnection.

2. Domestic appliance (1) according to claim 1, **characterised in that** the predetermined time interval (PZ) corresponds to a period of time for which, after disconnecting the energy store (8) from the voltage source (15), the motor control unit (7) can still be supplied with the supply voltage (UV) of the energy store (8).

3. Domestic appliance (1) according to claim 2, **characterised in that** the at least two operating modes (M1, M2) includes at least one first operating mode (M1) and a second operating mode (M2) and that the motor control unit (7) is configured to select the first operating mode (M1) if the coupling takes place after the expiration of the specified time interval (PZ) after the disconnection, and to select one of the operating modes (M1, M2) as a function of a counter value (ZW) if the coupling occurs within the specified time interval (PZ) after the disconnection,.

4. Domestic appliance (1) according to one of the preceding claims, **characterised in that** the motor control unit (7) is configured to detect a period of time after the disconnection of the energy store (8) from the voltage source (15), by means of a counter value (ZW), and to select one of the at least two operating modes (M1, M2) for the subsequent operation of the inverter (5) as a function of whether when coupling the energy store (8) to the voltage source (15) the counter value (ZW) is less than or greater than a predetermined limit value (TG).

5. Domestic appliance (1) according to claim 4, **characterised in that** the inverter (5) can be operated in at least three operating modes (M1, M2) which differ from one another with respect to the control of the rotational speed (n) and that at least two time intervals are predetermined below the limit value (TG). wherein the motor control unit (7) is designed, if when coupling the energy store (8) to the voltage source (15), the counter value (ZW) is less than the limit value (TG), to select one of the operating modes (M1, M2) for operation of the inverter (5) as a function of which of the at least two time intervals the counter value (ZW) lies within when coupling the energy store (8) to the voltage source (15).

6. Domestic appliance (1) according to one of the preceding claims, **characterised in that** the at least two operating modes (M1, M2) include at least a first operating mode (M1) and a second operating mode (M2) and the motor control unit (7) is designed to operate the drive motor (4) at a first rotational speed value (n1) in the first operating mode (M1) and the drive motor (4) at a higher second rotational speed value (n2) with reference to the first rotational speed value (n1) in the second operating mode (M2).

7. Domestic appliance (1) according to claim 6, **characterised in that** the motor control unit (7) is designed to select the first operating mode (M1) for the subsequent operation if the energy store (8) is coupled to the voltage source (15) after a predetermined time interval (PZ) has elapsed after the disconnection.

8. Domestic appliance (1) according to claim 6 or 7, **characterised in that** the central control device (18) is designed to change from the first operating mode (M1) to the second operating mode (M2) as a function of a drying level of items of laundry (3).

9. Domestic appliance (1) according to one of the preceding claims, **characterised in that** the at least two operating modes (M1, M2) differ from one another in terms of the gradient of a characteristic curve (K1, K2, H1, H2) in order to start up and/or shut down the drive motor (4).

10. Domestic appliance (1) according to one of the preceding claims, **characterised in that** the drive motor (4) is coupled to a laundry drum as a moveable component (2) and is embodied to drive the laundry drum.

11. Method for operating a drive motor (4) embodied as a brushless direct-current motor, by means of which a moveable component (2) of a domestic appliance (1), in particular a tumble dryer, is driven, wherein the drive motor (4) is controlled by means of an inverter (5) and the rotational speed (n) of the drive motor (4) is controlled by means of a motor control unit (7) of the inverter (5), wherein the inverter (5) is operated in at least two operating modes (M1, M2), which differ from one another with respect to control of the rotational speed (n), and wherein an electrical supply voltage (UV) for the motor control unit (7) is provided by means of at least one electrical energy store (8), **characterised in that** the at least one energy store (8) is coupled to a voltage source (15) by means of a central control device (18) and is disconnected again from the same voltage source (15), wherein the disconnection of the energy store (8) from and the coupling of the energy store (8) to the voltage source (15) is detected by means of the motor control unit (7) and after detecting the coupling, one of the at least two operating modes (M1, M2) for the subsequent operation of the inverter (5) is selected depending on whether the coupling occurs within or after expiration of a specified time interval (PZ) after the disconnection.

## Revendications

1. Appareil ménager (1), en particulier sèche-linge, avec un moteur d'entrainement (4) réalisé sous forme de moteur à courant continu sans balais (4) destiné à entrainer un composant mobile (2) de l'appareil ménager (1), avec un circuit inverseur (5) destiné à commander le moteur d'entrainement (4), dans lequel le circuit inverseur (5) présente une unité de commande de moteur (7) destinée à commander le régime (n) du moteur d'entrainement (4) et peut fonctionner selon au moins deux modes de fonctionnement (M1, M2) qui se différencient l'un de l'autre par la commande du régime (n), avec un circuit électrique intermédiaire (13) comprenant au moins un accumulateur d'énergie électrique (8) destiné à fournir une tension d'alimentation électrique (UV) à l'unité de commande de moteur (7), et avec un appareil de commande central (18) destiné à commander des procédés de fonctionnement de l'appareil ménager (1),
**caractérisé en ce que** l'unité de commande centrale (18) est conçue pour coupler au moins un accumulateur d'énergie (8) avec une source de tension (15) et pour séparer à nouveau celui-ci de ladite même source de tension (15),
dans lequel l'unité de commande de moteur (7) est conçue pour détecter la séparation de l'accumulateur d'énergie (8) par rapport à la source de tension (15) et le couplage de l'accumulateur d'énergie (8) par rapport à la source de tension (15) et, après détection dudit couplage, sélectionner un des au moins deux modes de fonctionnement (M1, M2) destinés au fonctionnement qui s'ensuit du circuit inverseur (5) en fonction du fait que le couplage a lieu au cours ou après écoulement d'un intervalle de temps (PZ) prédéterminé à la suite de ladite séparation.

2. Appareil ménager (1) selon la revendication 1, **caractérisé en ce que** l'intervalle de temps (PZ) prédéterminé correspond à une durée de temps pendant laquelle l'unité de commande de moteur (7) peut encore être alimentée en énergie par la tension d'alimentation (UV) de l'accumulateur d'énergie (8) après la séparation de l'accumulateur d'énergie (8) et de la source de tension (15).

3. Appareil ménager (1) selon la revendication 2, **caractérisé en ce que** les au moins deux modes de fonctionnement (M1, M2) comprennent au moins un premier mode de fonctionnement (M1) et un deuxième mode de fonctionnement (M2), et l'unité de commande de moteur (7) est conçue pour sélectionner le premier mode de fonctionnement (M1) dans le cas où le couplage a eu lieu après écoulement de l'intervalle de temps (PZ) prédéterminé à la suite de la séparation, et pour sélectionner un des modes de fonctionnement (M1, M2) en fonction d'une valeur de compteur (ZW) dans le cas où le couplage a lieu au cours de l'intervalle de temps (PZ) prédéterminé à la suite de la séparation.

4. Appareil ménager (1) selon l'une quelconque des revendications précédentes, **caractérisé en ce que** l'unité de commande de moteur (7) est conçue pour détecter, au moyen d'une valeur de compteur (ZW), une durée consécutive à la séparation de l'accumulateur d'énergie (8) et de la source de tension (15) et pour sélectionner un des au moins deux modes de fonctionnement (M1, M2) destinés au fonctionnement qui s'ensuit du circuit inverseur (5) en fonction du fait que la valeur de compteur (ZW) est inférieure ou supérieure à une valeur limite (TG) prédéterminée lors du couplage de l'accumulateur d'énergie (8) avec la source de tension (15).

5. Appareil ménager (1) selon la revendication 4, **caractérisé en ce que** le circuit inverseur (5) peut être utilisé en au moins trois modes de fonctionnement (M1, M2) qui se différencient les uns des autres par la commande du régime (n), et au moins deux intervalles de temps sont prédéterminés en dessous de la valeur limite (TG), dans lequel l'unité de commande de moteur (7) est conçue pour, dans le cas où la valeur de compteur (ZW) est inférieure à la valeur limite (TG) lors du couplage de l'accumulateur d'énergie (8) avec la source de tension (15), sélectionner un des modes de fonctionnement (M1, M2) destinés au fonctionnement du circuit inverseur (5) en fonction de l'intervalle de temps, parmi lesdits au moins deux intervalles de temps, dans lequel se situe la valeur de compteur (ZW) lors du couplage de l'accumulateur d'énergie (8) avec la source de tension (15).

6. Appareil ménager (1) selon l'une quelconque des revendications précédentes, **caractérisé en ce que** les au moins deux modes de fonctionnement (M1, M2) comprennent au moins un premier mode de fonctionnement (M1) et un deuxième mode de fonctionnement (M2), et l'unité de commande de moteur (7) est conçue pour, dans le premier mode de fonctionnement (M1), faire fonctionner le moteur d'entrainement (4) avec une première valeur de régime (n1) et, dans le deuxième mode de fonctionnement (M2), faire fonctionner le moteur d'entrainement (4) avec une deuxième valeur de régime (n2) supérieure à la première valeur de régime (n1).

7. Appareil ménager (1) selon la revendication 6, **caractérisé en ce que** l'unité de commande de moteur (7) est conçue pour sélectionner, pour le fonctionnement qui s'ensuit, le premier mode de fonctionnement (M1) dans le cas où le couplage de l'accumulateur d'énergie (8) avec la source de tension (15) a lieu après écoulement de l'intervalle de temps (PZ) prédéterminé à la suite de la séparation.

8. Appareil ménager (1) selon la revendication 6 ou 7, **caractérisé en ce que** l'appareil de commande central (18) est conçu pour échanger le premier mode de fonctionnement (M1) avec le deuxième mode de fonctionnement (M2) en fonction d'un degré de séchage de pièces de linge ((3).

9. Appareil ménager (1) selon l'une quelconque des revendications précédentes, **caractérisé en ce que** les au moins deux modes de fonctionnement (M1, M2) se différencient l'un de l'autre par la pente d'une ligne (K1, K2, H1, H2) par rapport à une montée en régime et/ou baisse de régime du moteur d'entrainement (4).

10. Appareil ménager (1) selon l'une quelconque des revendications précédentes, **caractérisé en ce que** le moteur d'entrainement (4) est couplé avec un tambour de lavage en tant que composant mobile (2) et est réalisé en vue d'un entrainement dudit tambour de lavage.

11. Procédé de fonctionnement d'un moteur d'entrainement (4) réalisé sous forme de moteur à courant continu sans balais, au moyen duquel est entrainé un composant mobile (2) d'un appareil ménager (1), en particulier un lave-linge, dans lequel le moteur d'entrainement (4) est commandé au moyen d'un circuit inverseur (5) et le régime (n) du moteur d'entrainement (4) est commandé au moyen d'une unité de commande de moteur (7) du circuit inverseur (5), dans lequel le circuit inverseur (5) fonctionne selon au moins deux modes de fonctionnement (M1, M2) qui se différencient l'un de l'autre par la commande du régime (n), et
dans lequel une tension d'alimentation électrique (UV) destinée à l'unité de commande de moteur (7) est fournie au moyen d'au moins un accumulateur d'énergie électrique (8),
**caractérisé en ce que** le au moins un accumulateur d'énergie (8) est couplé à une source de tension (15) et est à nouveau séparé de ladite même source de tension (15) au moyen d'un appareil de commande central (18),
dans lequel la séparation de l'accumulateur d'énergie (8) par rapport à la source de tension (15) et le couplage de l'accumulateur d'énergie (8) avec la source de tension (15) sont détectés au moyen de l'unité de commande de moteur (7) et un des au moins deux modes de fonctionnement (M1, M2) destinés au fonctionnement qui s'ensuit du circuit inverseur (5) est sélectionné après détection dudit couplage en fonction du fait que le couplage a lieu au cours ou après écoulement d'un intervalle de temps (PZ) prédéterminé à la suite de ladite séparation.
